# EUROPEAN PATENT APPLICATION

(11) **EP 3 127 961 A1**
(43) Date of publication of application: **08.02.2017**
(21) Application number: 15773466.6
(22) Date of filing: 03.04.2015
(51) Int. Cl.: C08L 29/14, B32B 17/10, B32B 27/30, C03C 27/12, C08K 5/06

(54) **POLYVINYL ACETAL COMPOSITION**

(30) Priority: 04.04.2014 JP 2014077970; 04.04.2014 JP 2014077971; 27.03.2015 JP 2015067227
(71) Applicant: Kuraray Co., Ltd., Kurashiki-shi, Okayama 710-0801 (JP)
(72) Inventor: ASANUMA, Yoshiaki, Kurashiki-shi Okayama 713-8550 (JP); KUSUDOU, Takeshi, Kurashiki-shi Okayama 713-8550 (JP)
(74) Representative: Müller-Boré & Partner Patentanwälte PartG mbB
(86) International application number: PCT/JP2015/060587
(87) International publication number: WO 2015/152394

(57) **Abstract**

Provided herein is a composition that includes a compound (I), and one or more diester compounds (II) selected from compounds represented by formula 1 and compounds represented by formula 2. The compound (I) and the diester compound (II) are contained in X parts by mass and Y parts by mass, respectively, with respect to 100 parts by mass of a polyvinyl acetal having an average amount of residual hydroxyl group of 15 to 50 mol%. In the composition, X = 3 to 100, Y = 5 to 60, and X + Y = 42 to 120. The composition does not involve bleeding of a plasticizer even when stored at low temperature, or cause problems due to extraction of a component even when brought into contact with water. The composition can thus develop desirable sound insulation performance when used as an intermediate film for laminated glass.

## Description

### Technical Field

The present invention relates to compositions containing polyvinyl acetal, and to a sheet made from the compositions, and use thereof.

### Background Art

Polyvinyl acetals such as polyvinyl butyral have desirable adhesion or compatibility for organic and inorganic base materials, and desirable solubility in organic solvents, and have been widely used as various types of adhesives, binders for ceramics, inks, coating materials, and an intermediate film for laminated glass.

There have been studies of various functional intermediate films for laminated glass, and, particularly, sound-insulation intermediate films for laminated glass have been actively studied out of the growing demand in the market. There is a wide range of studies conducted for such sound-insulation intermediate films for laminated glass, including a multilayer sound-insulation intermediate film having a layer of a polyvinyl acetal containing a relatively small amount of residual hydroxyl group mixed with a large amount of plasticizer, and a layer of a polyvinyl acetal containing a relatively large amount of residual hydroxyl group mixed with a moderate amount of plasticizer (for example, PTL 1). A problem of such an intermediate film, however, is that the trims and the off-spec products that generated in the production contain polyvinyl acetals that differ in the amount of residual hydroxyl group, and that the film cannot be easily recycled into a transparent intermediate film because such polyvinyl acetals are not homogenously compatible with each other.

Sound-insulation intermediate films for laminated glass intended to solve the recycle issue have been proposed, such as a single-layer sound-insulation intermediate film for laminated glass containing a relatively large amount of plasticizer in polyvinyl acetal. Such an intermediate film contains a relatively larger amount of plasticizer than common intermediate films for laminated glass, and accordingly the surface is adherent (for example, PTL 2). Because of this, blocking (autohesion) occurs when the film is stored in temperatures near room temperature, and the film is stored at low temperature (for example, 5°C or less) to prevent this. However, this is problematic as it may cause the plasticizer to bleed. A method is available that is intended to solve this problem with the use of a plasticizer compound having desirable compatibility with polyvinyl acetal. However, such a compound is highly hydrophilic, and becomes easily extracted when the intermediate film for laminated glass contacts water. Extraction of the plasticizer may cause problems, and further improvements are needed.

### Citation List

### Patent Literature

PTL 1: JP-A-2007-331959
PTL 2: JP-A-2007-008798

### Summary of Invention

### Technical Problem

An object of the present invention is to provide a polyvinyl acetal composition that does not involve bleeding of a plasticizer even when stored at low temperatures, or cause problems due to extraction of a component even when brought into contact with water, and that develops desirable sound insulation performance when used as an intermediate film for laminated glass.

### Solution to Problem

The present invention achieves the foregoing object by providing:
[1] A composition comprising a compound (I), and one or more diester compounds (II) selected from compounds represented by formula 1 and compounds represented by formula 2,
   the compound (I) and the one or more diester compounds (II) being contained in X parts by mass and Y parts by mass, respectively, with respect to 100 parts by mass of a polyvinyl acetal having an average amount of residual hydroxyl group of 15 to 50 mol%,
   wherein the compound (I) is a compound selected from:
   an ester compound of an unsaturated aliphatic carboxylic acid of 12 to 20 carbon atoms, and a monohydric to trihydric alcohol of 1 to 12 carbon atoms (hereinafter, such an ester compound is also referred to as "unsaturated carboxylic acid ester compound");
   a polyester-based alcohol compound; and
   a plasticizer compound having a bisphenol skeleton, and
   wherein X = 3 to 100, Y = 5 to 60, and X + Y = 42 to 120, 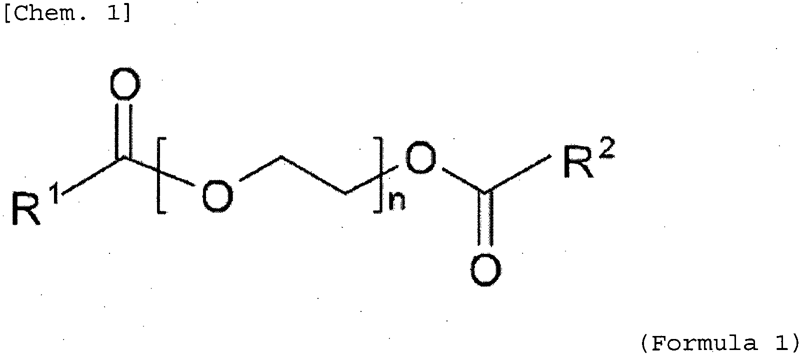 wherein R¹ and R² each independently represent a C5 to C16 organic group that may have an ether bond, and n is 1 to 10, 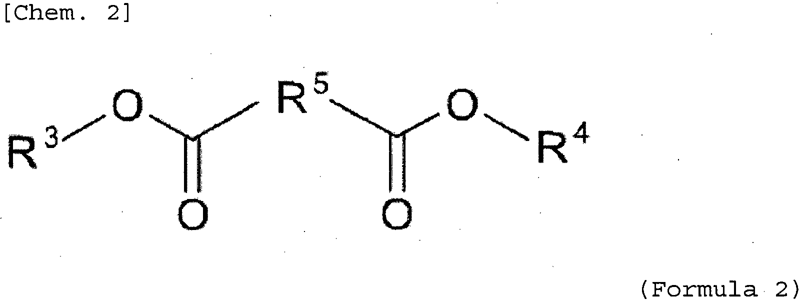 wherein R³ and R⁴ each independently represent a C4 to C16 organic group that may have an ether bond, and R⁵ is a hydrocarbon group of 2 to 10 carbon atoms.

   Preferably, the foregoing object can also be achieved by the following.
[2] The composition of [1], wherein X < Y.
[3] The composition of [1] or [2], wherein the compound (I) has a hydroxyl number of 15 to 450 mgKOH/g.
[4] The composition of any one of [1] to [3], wherein the compound (I) is a polyester-based alcohol compound.
[5] The composition of [4], wherein the polyester-based alcohol compound contains a condensation polymer of a polyvalent carboxylic acid and a polyhydric alcohol.
[6] The composition of [5], wherein the polyvalent carboxylic acid is an aliphatic dicarboxylic acid of 4 to 12 carbon atoms.
[7] The composition of [5], wherein the polyhydric alcohol is an aliphatic diol of 2 to 12 carbon atoms.
[8] The composition of any one of [5] to [7], wherein the number of carbon atoms per molecule of the polyvalent carboxylic acid, and the number of carbon atoms per molecule of the polyhydric alcohol are total 10 to 20.
[9] The composition of [4], wherein the polyester-based alcohol compound contains a polymer of a hydroxycarboxylic acid or a lactone compound.
[10] The composition of [9], wherein the hydroxycarboxylic acid or the lactone compound has 2 to 10 carbon atoms.
[11] The composition of [4], wherein the polyester-based alcohol compound contains a condensation polymer of a carbonate compound and a polyhydric alcohol.
[12] The composition of [11], wherein the polyhydric alcohol is an aliphatic diol of 2 to 12 carbon atoms.
[13] The composition of any one of [1] to [3], wherein the compound (I) is a plasticizer compound having a bisphenol skeleton.
[14] The composition of [13], wherein the plasticizer compound having a bisphenol skeleton is a bisphenol ether compound.
[15] The composition of [14], wherein the bisphenol ether compound is a compound having a chemical structure of formula 3, 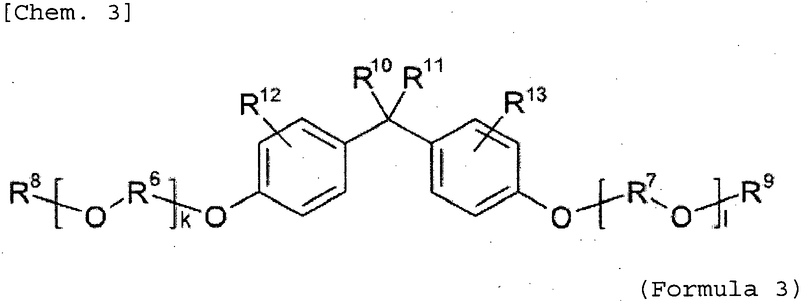 wherein R⁶ and R⁷ each independently represent a group selected from a dimethylene group that may have an alkyl substituent, a trimethylene group that may have an alkyl substituent, and a tetramethylene group that may have an alkyl substituent, R⁸ and R⁹ each independently represent a group selected from a hydrogen atom, an acyl group, and an alkyl group, R¹⁰ and R¹¹ each independently represent a group selected from a hydrogen atom and an organic group, R¹² and R¹³ each independently represent any substituent that may be present or absent, and k and 1 are any natural numbers, wherein the average of (k + 1) per molecule of the compound contained in a first plasticizer is 2 to 50.
[16] The composition of [15], wherein 50 to 100 mol% of R⁶ and R⁷ contained in the bisphenol ether compound is a dimethylene group that may have an alkyl substituent.
[17] The composition of [15] or [16], wherein 5 to 100 mass% of R⁸ and R⁹ contained in the bisphenol ether compound is a hydrogen atom.
[18] The composition of any one of [15] to [17], wherein R¹⁰ and R¹¹ contained in the bisphenol ether compound are methyl groups.
[19] The composition of any one of [1] to [3], wherein the compound (I) is an ester compound of an unsaturated aliphatic carboxylic acid of 12 to 20 carbon atoms, and a monohydric to trihydric alcohol of 1 to 12 carbon atoms.
[20] The composition of [19], wherein the monohydric to trihydric alcohol of 1 to 12 carbon atoms is a dihydric or trihydric alcohol of 2 to 12 carbon atoms.
[21] The composition of any one of [1] to [20], wherein the compound (I) has a number average molecular weight based on hydroxyl number of 200 to 2,500.
[22] The composition of any one of [1] to [21], wherein a mixture of X parts by mass of the compound (I) and Y parts by mass of the diester compound (II) is a homogenous liquid at 80°C.
[23] The composition of any one of [1] to [22], which has a weight loss of less than 2 mass% as measured after the composition is molded into a sheet measuring 5 cm in length, 5 cm in width, and 0.8 mm in thickness, and dipped in 92.5°C ± 2.5°C hot water for 2 hours.
[24] A sheet comprising the composition of any one of [1] to [23].
[25] An intermediate film for laminated glass, comprising the sheet of [24].
[26] A multilayer intermediate film for laminated glass, comprising at least one layer of the sheet of [24].
[27] A laminated glass comprising the intermediate film for laminated glass of [25], or the multilayer intermediate film for laminated glass of claim 26 between a pair of glass plates.

### Advantageous Effects of Invention

The present invention can provide a polyvinyl acetal composition that does not involve bleeding of a plasticizer even when stored at low temperatures, or cause problems due to extraction of a component even when brought into contact with water, and that develops desirable sound insulation performance when used as an intermediate film for laminated glass.

### Description of Embodiments

The compound (I) contained in the composition of the present invention is a compound selected from: an ester compound of an unsaturated aliphatic carboxylic acid of 12 to 20 carbon atoms, and a monohydric to trihydric alcohol of 1 to 12 carbon atoms; a polyester-based alcohol compound; and a plasticizer compound having a bisphenol skeleton.

The polyester-based alcohol compound is described first.

The polyester-based alcohol compound is not particularly limited, as long as it is a compound having a polyester structure, and at least one hydroxyl group per molecule. Examples of such compounds include a polyester-based alcohol compound as a condensation polymer of a polyvalent carboxylic acid and a polyhydric alcohol (hereinafter, referred to as "condensation polymerization polyester-based alcohol compound"), a polyester-based alcohol compound as a polymer of a hydroxycarboxylic acid or a lactone compound (hereinafter, referred to as "hydroxycarboxylic acid polyester-based alcohol compound"), and a polyester-based alcohol compound as a condensation polymer of a carbonate compound and a polyhydric alcohol (hereinafter, referred to as "polyester carbonate-based alcohol compound"). The following describes these compounds, in order.

The condensation polymerization polyester-based alcohol compound is obtained through condensation polymerization of a polyvalent carboxylic acid and a polyhydric alcohol in the presence of excess polyhydric alcohol. Examples of the polyvalent carboxylic acid include, but are not limited to, aliphatic dicarboxylic acids such as succinic acid, glutaric acid, adipic acid, suberic acid, sebacic acid, dodecanedioic acid, and 1,2-cyclohexane dicarboxylic acid; aliphatic tricarboxylic acids such as 1,2,3-propanetricarboxylic acid, and 1,3,5-pentanetricarboxylic acid; aromatic dicarboxylic acids such as phthalic acid, and terephthalic acid; and aromatic tricarboxylic acids such as trimellitic acid. Preferred are aliphatic dicarboxylic acids of 4 to 12 carbon atoms, preferably aliphatic dicarboxylic acids of 5 to 10 carbon atoms, more preferably aliphatic dicarboxylic acids of 6 to 8 carbon atoms for their desirable properties including the desirable heat resistance of the product polyester, desirable compatibility with polyvinyl acetal, and a desirable plasticizing effect for polyvinyl acetal. Examples of the polyhydric alcohol include, but are not limited to, aliphatic diols such as ethylene glycol, 1,2-propanediol, 1,3-propanediol, 1,2-butanediol, 1,3-butanediol, 1,4-butanediol, 1,2-hexanediol, 3-methyl-1,5-pentanediol, 1,2-octanediol, 1,2-nonanediol, 1,8-nonanediol, 1,9-nonanediol, 1,2-cyclohexanediol, 1,2-cyclohexane dimethanol, 1,4-cyclohexane dimethanol, diethylene glycol, and triethylene glycol; aliphatic triols such as glycerine; and aliphatic tetraols such as erythritol, and pentaerythritol. Preferred are aliphatic diols of 2 to 12 carbon atoms, preferably aliphatic diols of 3 to 10 carbon atoms, more preferably aliphatic diols of 4 to 8 carbon atoms in terms of improving the weather resistance of the condensation polymerization polyester-based alcohol compound, compatibility with polyvinyl acetal, and compatibility between polyvinyl acetal and the diester compound. The combination of the polyvalent carboxylic acid and the polyhydric alcohol is not particularly limited. However, in terms of compatibility with polyvinyl acetal, the preferred combination is one in which the number of carbon atoms per molecule of the polyvalent carboxylic acid, and the number of carbon atoms per molecule of the polyhydric alcohol are total 10 to 20, preferably 10 to 16, more preferably 10 to 14.

Specific examples of the condensation polymerization polyester-based alcohol compound used in the present invention include, but are not limited to, polyester diols obtained through condensation polymerization of adipic acid and 3-methyl-1,5-pentanediol; polyester diols obtained through condensation polymerization of sebacic acid and 3-methyl-1,5-pentanediol; and polyester diols obtained through condensation polymerization of adipic acid and 1,8-nonanediol.

The condensation polymerization polyester-based alcohol compound may be produced by using conventionally known methods. For example, a polyvalent carboxylic acid and a polyhydric alcohol are dissolved in a suitable solvent, as required, and an appropriate amount of catalyst is added to promote a condensation polymerization reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. Water that generates during the reaction may be evaporated, and the reaction temperature may be appropriately varied. After the reaction, the catalyst is deactivated to obtain the condensation polymerization polyester-based alcohol compound. The molar ratio of the polyvalent carboxylic acid and the polyhydric alcohol is typically 100/100.5 to 100/150, more preferably 100/101 to 100/115.

The hydroxycarboxylic acid polyester-based alcohol compound is obtained through condensation polymerization of hydroxycarboxylic acid. Examples of the hydroxycarboxylic acid include glycolic acid, lactic acid, 2-hydroxybutanoic acid, 3-hydroxybutanoic acid, 4-hydroxybutanoic acid, 6-hydroxyhexanoic acid, and ricinoleic acid. A lactone compound in which these hydroxycarboxylic acids are condensed within the molecule also may be used as feedstock. Examples of such lactone compounds include, but are not limited to, β-butyrolactone, δ-valerolactone, ε-caprolactone, and 4-methyl-δ-valerolactone. When using a lactone compound, the hydroxycarboxylic acid polyester-based alcohol compound may be obtained through ring-opening polymerization. Preferred as the hydroxycarboxylic acid or the lactone compound is a hydroxycarboxylic acid or a lactone compound of 6 to 10 carbon atoms in terms of the heat resistance of the polyester-based alcohol compound, compatibility with polyvinyl acetal, and the plasticizing effect. Particularly preferred is 6-hydroxycarboxylic acid, or ε-caprolactone.

Aside from the hydroxycarboxylic acids and the lactone compounds, the hydroxycarboxylic acid polyester-based alcohol compound used in the present invention may use monohydric alcohols or polyhydric alcohols as feedstock. Useable as the monohydric alcohols are, for example, methanol, ethanol, butanol, isobutanol, hexanol, 2-ethyl-1-butanol, and 2-ethyl-1-hexanol. The polyhydric alcohols may be the same polyhydric alcohols exemplified above as the possible feedstock of the condensation polymerization polyester-based alcohol compound.

Specific examples of the hydroxycarboxylic acid polyester-based alcohol compound used in the present invention include, but are not limited to, poly ε-caprolactone diols obtained through addition ring-opening polymerization of ethylene glycol with ε-caprolactone; poly ε-caprolactone diols obtained through addition ring-opening polymerization of propylene glycol with ε-caprolactone; and poly ε-caprolactone diols obtained through addition ring-opening polymerization of 3-methyl-1,5-pentanediol with ε-caprolactone.

The hydroxycarboxylic acid polyester-based alcohol compound may be produced by using conventionally known methods. Specifically, a hydroxycarboxylic acid, a lactone compound, and optionally a monohydric alcohol or a polyhydric alcohol are dissolved in a suitable solvent, as required, and an appropriate amount of catalyst is added to promote reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. Water that generated during the reaction may be evaporated, and the reaction temperature may be appropriately varied. After the reaction, the catalyst is deactivated to obtain the hydroxycarboxylic acid polyester-based alcohol compound.

The polyester carbonate-based alcohol compound is obtained through condensation polymerization of a polyhydric alcohol and a carbonate ester compound in the presence of excess polyhydric alcohol. The polyhydric alcohol may be the same polyhydric alcohol exemplified above as the feedstock of the condensation polymerization polyester-based alcohol compound. Preferably, the polyhydric alcohol is a polyhydric alcohol of 2 to 12 carbon atoms, preferably a polyhydric alcohol of 4 to 10 carbon atoms, further preferably a polyhydric alcohol of 6 to 8 carbon atoms in terms of compatibility with polyvinyl acetal, and the plasticizing effect. Examples of the carbonate ester compound include ethylene carbonate, diethyl carbonate, and diphenyl carbonate.

Specific examples of the polyester carbonate-based alcohol compound used in the present invention include, but are not limited to, polycarbonate diols obtained through reaction of 3-methyl-1,5-pentanediol and diethyl carbonate.

The polyester carbonate-based alcohol compound may be produced by using conventionally known methods. Specifically, a polyhydric alcohol and a carbonate ester compound are dissolved in a suitable solvent, as required, and an appropriate amount of catalyst is added to promote a condensation polymerization reaction. Examples of the catalyst include inorganic acids such as hydrochloric acid, sulfuric acid, nitric acid, and phosphoric acid; organic acids such as trifluoroacetic acid, and para-toluenesulfonic acid; titanium compounds such as titanic acid, tetraalkoxy titanium, and titanium tetracarboxylate; Lewis acids such as tin compounds; inorganic bases such as sodium hydroxide, and potassium hydroxide; and organic bases such as triethylamine, pyridine, 1,8-diazabicyclo[5.4.0]-7-undecene, and sodium acetate. An alcohol that generated in the ester exchange reaction of the carbonate ester compound and the polyhydric alcohol may be evaporated during the reaction, and the reaction temperature may be appropriately varied. After the reaction, the catalyst is deactivated to obtain the polyester carbonate-based alcohol compound.

The following describes the plasticizer compound having a bisphenol skeleton. The plasticizer compound having a bisphenol skeleton is not particularly limited, as long as it is a compound that is compatible with polyvinyl acetal, and has a plasticizing effect for polyvinyl acetal, and in which any of the hydrogen atoms contained in a bisphenol compound is substituted with any functional group. Here, the bisphenol compound is, for example, a known bisphenol compound having two phenolic hydroxyl groups. Examples of such bisphenol compounds include, but are not limited to, bisphenol A (2,2-bis(4-hydroxyphenyl)propane), bisphenol B (2,2-bis(4-hydroxyphenyl)butane), bisphenol F (bis(4-hydroxyphenyl)methane), bisphenol AP (1,1-bis(4-hydroxyphenyl)-1-phenylethane), bisphenol AF (2,2-bis(4-hydroxyphenyl)hexafluoropropane), bisphenol BP (bis(4-hydroxyphenyl)diphenylmethane), bisphenol C (2,2-bis(3-methyl-4-hydroxyphenyl)propane, bisphenol C (bis(4-hydroxyphenyl)-2,2-dichloroethylene), bisphenol E (1,1-bis(4-hydroxyphenyl)ethane), bisphenol G (2,2-bis(4-hydroxy-3-isopropylphenyl)propane), bisphenol M (1,3-bis(2-(4-hydroxyphenyl)-2-propyl)benzene), bisphenol S (bis(4-hydroxyphenyl)sulfone), bisphenol P (1,4-bis(2-(4-hydroxyphenyl)-2-propyl)benzene), bisphenol PH (5,5'-(1-methylethylidene)-bis(1,1'-(bisphenyl)-2-ol)propane), bisphenol TMC (1,1-bis(4-hydroxyphenyl)-3,3,5-trimethylcyclohexane), and bisphenol Z (1,1-bis(4-hydroxyphenyl)cyclohexane).

The plasticizer compound having a bisphenol skeleton used in the present invention is a compound in which any of the hydrogen atoms contained in a bisphenol compound is substituted with any functional group. In terms of improving compatibility with polyvinyl acetal, and compatibility between polyvinyl acetal and the diester compound, the plasticizer compound having a bisphenol skeleton is preferably a compound in which the hydrogen atom adjacent to the oxygen atom directly bonded to the constituent carbon atom of the aromatic ring of a bisphenol compound is substituted with any functional group. Examples of such functional groups include alkyl groups such as a methyl group, an ethyl group, and a butyl group. Preferred as the plasticizer compound having a bisphenol skeleton is a bisphenol ether compound. The bisphenol ether compound refers to a compound having the same chemical structure as a compound obtained after the reaction of each of the two hydroxyl groups of a bisphenol compound with one molecule of an alcohol compound. Particularly preferred as such a bisphenol ether compound is a compound having the chemical structure of the formula 3. 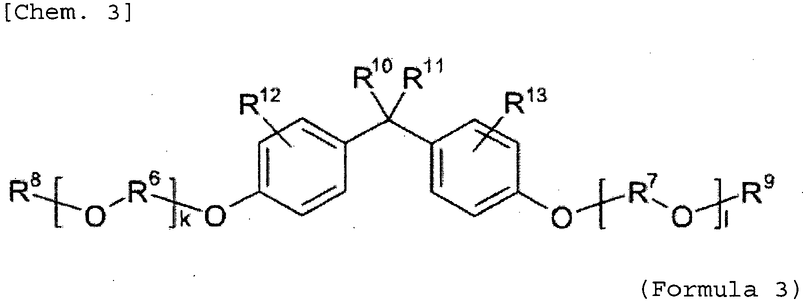 In formula 3, R⁶ and R⁷ each independently represent a group selected from a dimethylene group that may have an alkyl substituent, a trimethylene group that may have an alkyl substituent, and a tetramethylene group that may have an alkyl substituent. The dimethylene group is a group represented by -CH₂-CH₂-, and the dimethylene group having an alkyl substituent refers to a dimethylene group in which any one or more of the hydrogen atoms, preferably any one of the hydrogen atoms contained is substituted with an alkyl group, more preferably an alkyl group of 1 to 20 carbon atoms. The trimethylene group is a group represented by-CH₂-CH₂-CH₂-, and the trimethylene group having an alkyl substituent refers to a trimethylene group in which any one or more of the hydrogen atoms, preferably any one of the hydrogen atoms contained is substituted with an alkyl group, more preferably an alkyl group of 1 to 20 carbon atoms. The tetramethylene group is a group represented by -CH₂-CH₂-CH₂-CH₂-, and the tetramethylene group having an alkyl substituent is a tetramethylene group in which any one or more of the hydrogen atoms, preferably any one of the hydrogen atoms contained is substituted with an alkyl group, more preferably an alkyl group of 1 to 20 carbon atoms. Preferred is a dimethylene group that may have an alkyl substituent. A dimethylene group, or a dimethylene group having one methyl substituent, specifically -CH₂-CH(-CH₃)-is preferred in terms of compatibility between polyvinyl acetal and the plasticizer compound having a bisphenol skeleton, and compatibility between polyvinyl acetal and the diester compound.

When a bisphenol ether compound is used as the plasticizer compound having a bisphenol skeleton of the present invention, it is preferable for compatibility between polyvinyl acetal and the plasticizer compound having a bisphenol skeleton, and compatibility between polyvinyl acetal and the diester compound that one of or both of R⁶ and R⁷ contained in preferably 50 to 100 mol%, more preferably 70 to 100 mol%, further preferably 90 to 100 mol% of the bisphenol compound in the bisphenol ether compound are dimethylene groups that may have an alkyl substituent.

In formula 3, R⁸ and R⁹ each independently represent a group selected from a hydrogen atom, an acyl group, and an alkyl group. The acyl group is preferably an acyl group of 2 to 20 carbon atoms, more preferably an acyl group of 2 to 8 carbon atoms. Examples include an acetyl group, an ethyl carbonyl group, a propyl carbonyl group, a butyl carbonyl group, a pentyl carbonyl group, a 3-pentyl carbonyl group, and a 3-heptyl carbonyl group. The alkyl group is preferably an alkyl group of 1 to 20 carbon atoms, more preferably an alkyl group of 1 to 8 carbon atoms. Examples include a methyl group, an ethyl group, a propyl group, a butyl group, a hexyl group, and an octyl group (including branched alkyl groups such as a 2-ethylhexyl group). The alkyl groups may be linear or branched. R⁸ and R⁹ may be freely selected from these groups. However, in terms of improving compatibility between polyvinyl acetal and the plasticizer compound having a bisphenol skeleton, and compatibility between polyvinyl acetal and the diester compound, it is preferable in the composition of the present invention that hydrogen atoms account for preferably 5 to 100 mol%, more preferably 10 to 100 mass%, further preferably 30 to 100 mass%, even more preferably 50 to 100 mass%, particularly preferably 80 to 100 mass%, optimally 90 to 100 mass% of the total amount of R⁸ and R⁹ contained in the bisphenol ether compound.

In formula 3, R¹⁰ and R¹¹ each independently represent a group selected from a hydrogen atom and any organic group. R¹⁰ and R¹¹ may be directly bonded to each other to form a cyclic structure. However, it is preferable in terms of the plasticizing effect of a first plasticizer that R¹⁰ and R¹¹ do not form a cyclic structure. Examples of R¹⁰ and R¹¹ include a hydrogen atom, aliphatic groups such as a methyl group, an ethyl group, a propyl group, a butyl group, and a trifluoromethyl group, and aromatic groups such as a phenyl group. A methyl group is preferred in terms of compatibility between polyvinyl acetal and the plasticizer compound having a bisphenol skeleton, and compatibility between polyvinyl acetal and the diester compound.

In formula 3, R¹² and R¹³ independently represent any substituent that may be present or absent. When R¹² and R¹³ are present, the positions of these groups on the aromatic rings, or the number of these groups are not limited, and these may be the same or different when two or more groups are present. Specific examples of R¹² and R¹³ include, but are not limited to, aliphatic groups such as a methyl group, an ethyl group, a propyl group, a butyl group, an isobutyl group, and a tert-butyl group; aromatic groups such as a phenyl group; and halogen atoms such as a fluorine atom, a chlorine atom, and a bromine atom.

In formula 3, k and 1 are any natural numbers. In terms of compatibility between polyvinyl acetal and the plasticizer compound having a bisphenol skeleton, and compatibility between polyvinyl acetal and the diester compound, the average of k + 1 per molecule of the bisphenol ether compound is preferably 2 to 50, more preferably 2 to 20, further preferably 2 to 15. The average of k + 1 is preferably 2 to 10, more preferably 2 to 8, further preferably 2 to 4 in terms of the sound insulation performance of the composition obtained, specifically in terms of reducing a sound insulation performance drop due to the coincidence effect in an application as an intermediate film for laminated glass. When the average of k + 1 exceeds 50, the bisphenol ether compound may become more likely to dissolve in water. This is not preferable in terms of reducing the weight loss that occurs when the composition of the present invention is molded into a sheet measuring 5 cm in length, 5 cm in width, and 0.8 mm in thickness, and dipped in 92.5 ± 2.5°C hot water for 2 hours, as will be described later.

The following describes the unsaturated carboxylic acid ester compound. The unsaturated carboxylic acid ester compound is typically an ester compound of an aliphatic carboxylic acid of 12 to 20 carbon atoms containing a carbon-carbon double bond, and a monohydric to trihydric alcohol of 1 to 12 carbon atoms. The aliphatic carboxylic acid of 12 to 20 carbon atoms containing a carbon-carbon double bond is not particularly limited, as long as it is an aliphatic carboxylic acid of 12 to 20 carbon atoms, preferably 16 to 20 carbon atoms containing at least one, preferably one carbon-carbon double bond. Examples of such aliphatic carboxylic acids include oleic acid, linoleic acid, linolenic acid, and ricinoleic acid. Preferred for heat stability are oleic acid, and ricinoleic acid. Examples of the monohydric to trihydric alcohol of 1 to 12 carbon atoms include, but are not limited to, monohydric alcohols such as methanol, ethanol, butanol, 2-ethylhexanol, octanol, decanol, and cyclohexanol; dihydric alcohols such as ethylene glycol, 1,2-propylene glycol, 1,3-propylene glycol, 1,2-butyleneglycol, diethylene glycol, triethylene glycol, and tetraethylene glycol; and trihydric alcohols such as glycerine. When a dihydric or a trihydric alcohol is used as the monohydric to trihydric alcohol of 1 to 12 carbon atoms, one molecule, or two or more molecules of aliphatic carboxylic acid of 12 to 20 carbon atoms containing a carbon-carbon double bond may be reacted with one molecule of the alcohol, or the alcohol may be reacted with a carboxylic acid other than the aliphatic carboxylic acid of 12 to 20 carbon atoms containing a carbon-carbon double bond, provided that the reaction involves at least one molecule of aliphatic carboxylic acid of 12 to 20 carbon atoms containing a carbon-carbon double bond.

In terms of preventing a loss due to vaporization of the unsaturated carboxylic acid ester compound during a long use of the composition of the present invention, preferred for use as the monohydric to trihydric alcohol of 1 to 12 carbon atoms is a dihydric or trihydric alcohol of 2 to 12 carbon atoms, more preferably a trihydric alcohol of 3 to 12 carbon atoms. On the other hand, in terms of the plasticizing effect for polyvinyl acetal, preferred for use as the monohydric to trihydric alcohol of 1 to 12 carbon atoms is a monohydric alcohol. In terms of developing a good balance between a loss due to the vaporization of the aliphatic carboxylic acid ester, and the plasticizing effect for polyvinyl acetal, the monohydric to trihydric alcohol of 1 to 12 carbon atoms has preferably 1 to 8 carbon atoms, more preferably 2 to 6 carbon atoms.

Examples of the unsaturated carboxylic acid ester compound used in the present invention include unsaturated carboxylic acid ester compounds having a hydroxyl group, such as methyl ricinoleate, butyl ricinoleate, ethylene glycol monoricinoleate, propylene glycol monoricinoleate, triethylene glycol monoricinoleate, triethylene glycol diricinoleate, glycerine diricinoleate, glycerine triricinoleate, triethylene glycol monooleate, and glycerine dioleate; and unsaturated carboxylic acid ester compounds that do not have a hydroxyl group, such as triethylene glycol dioleate. Preferred in terms of improving compatibility between polyvinyl acetal and the diester compound are unsaturated carboxylic acid ester compounds having a hydroxyl group.

The hydroxyl number of the compound (I) used in the present invention is not particularly limited, and is preferably 15 to 450 mgKOH/g, more preferably 50 to 350 mgKOH/g. The hydroxyl number is preferably 80 to 330 mgKOH/g in terms of compatibility between the polyvinyl acetal and the compound (I) contained in the composition of the present invention, and compatibility between the polyvinyl acetal and the diester compound (II). The hydroxyl number of the compound (I) used in the present invention is determined according to JIS K1557-1.

The number average molecular weight based on the hydroxyl number of compound (I) is not particularly limited, and is preferably 200 to 2,500, more preferably 300 to 1,500, further preferably 400 to 1,000. In these ranges of the number average molecular weight based on hydroxyl number, the compound (I) becomes unlikely to vaporize during a long use of the composition of the present invention, and the compatibility with polyvinyl acetal, and the plasticizing effect for polyvinyl acetal become desirable. The number average molecular weight based on hydroxyl number is a value obtained as (the number of hydroxyl groups per molecule of compound (I))/(the mass of hydroxyl group per gram of compound (I) [mol/g]) = 1,000 x (the number of hydroxyl groups per molecule of compound (I))/((the hydroxyl number of compound (I))/56).

When the content of the compound (I) with respect to 100 parts by mass of the polyvinyl acetal in the composition of the present invention is X parts by mass, X is 3 to 100, preferably 5 to 80, further preferably 7 to 50, particularly preferably 7 to 40, even more preferably 7 to 35, most preferably 7 to 30. Note that the upper limits and the lower limits of these ranges are preferred values, and may be freely combined. The same applies to the other numerical ranges specified in this specification. When X is less than 3, the components may bleed when the composition of the present invention is handled at low temperatures (for example, 5°C or less), or the sound insulation performance may become insufficient when the composition of the present invention is used as an intermediate film for laminated glass. On the other hand, when X is larger than 100, extraction of a component may occur when the composition of the present invention is brought into contact with water.

The following describes the diester compound (II) contained in the composition of the present invention. The diester compound (II) is at least one selected from compounds represented by the formula 1 below, and compounds represented by the formula 2 below. The diester compound (II) has a good balance between compatibility with polyvinyl acetal, and the plasticizing effect for polyvinyl acetal, and makes the composition less absorbent of water so that extraction becomes less likely to occur even when the composition contacts water. This provides an effect that reduces the property changes as might occur when the composition of the present invention is used for extended time periods.

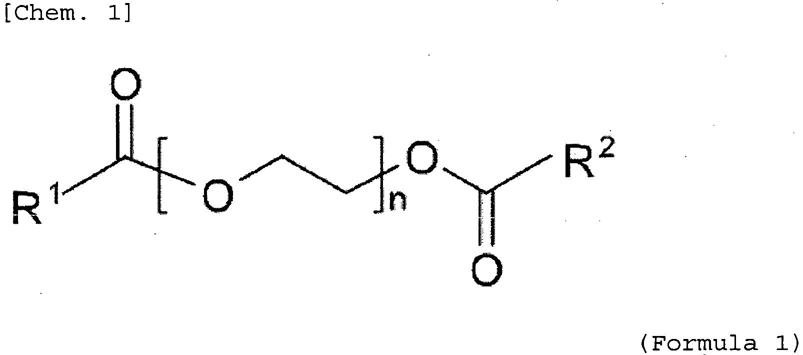

In formula 1, R¹ and R² each independently represent a C5 to C16 organic group that may have an ether bond, and n is 1 to 10.

Preferably, R¹ and R² each independently represent a hydrocarbon group of 5 to 16 carbon atoms, or a group containing an ether bond of a structure with an oxygen atom inserted in the carbon-carbon bond of the hydrocarbon group, more preferably an alkyl group of 5 to 16 carbon atoms, or a group containing an ether bond of a structure with an oxygen atom inserted in the carbon-carbon bond of the alkyl group. Examples of R¹ and R² include a pentyl group, a 3-pentyl group, a hexyl group, a heptyl group, a 3-heptyl group, an octyl group, a cyclohexyl group, a decyl group, and a group containing an ether bond of a structure with an oxygen atom inserted in the carbon-carbon bond of these groups (for example, a butoxymethyl group). More preferably, R¹ and R² are organic groups of 7 to 11 carbon atoms, further preferably organic groups of 7 to 8 carbon atoms. Preferably, n is 3 to 8, more preferably 3 to 4. Specific examples of such diester compounds (II) include triethylene glycol di-2-ethylhexanoate (3G8), tetraethylene glycol di-2-ethylhexanoate (4G8), and triethylene glycol didecanoate, of which 3G8 and 4G8 are more preferred, and 3G8 is optimal because 3G8 is readily available at low cost, and has a desirable plasticizing effect for polyvinyl acetal, and good compatibility with polyvinyl acetal.

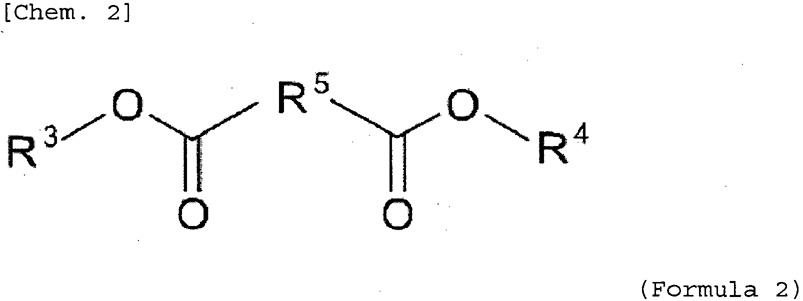

In formula 2, R³ and R⁴ each independently represent a C4 to C16 organic group that may have an ether bond, and R⁵ is a hydrocarbon group of 2 to 10 carbon atoms.

Preferably, R³ and R⁴ each independently represent a hydrocarbon group of 4 to 16 carbon atoms, or a group containing an ether bond of a structure with an oxygen atom inserted in the carbon-carbon bond of the hydrocarbon group, more preferably an alkyl group of 4 to 16 carbon atoms, or a group containing an ether bond of a structure with an oxygen atom inserted in the carbon-carbon bond of the alkyl group. Examples of such groups include a butyl group, a hexyl group, a heptyl group, an octyl group, a cyclohexyl group, a decyl group, a 2-butoxyethyl group, and a 2-(2-butoxy)ethoxyethyl group. More preferably, R³ and R⁴ are organic groups of 5 to 11 carbon atoms, further preferably organic groups of 6 to 8 carbon atoms. Preferably, R⁵ is an alkylene group or a cycloalkylene group of 2 to 10 carbon atoms. Specific examples of R⁵ include a 1,4-butylene group, a 1,6-hexylene group, a 1,8-octylene group, a 1,2-cyclohexylene group, and a 1,4-cyclohexylene group. Preferred are hydrocarbon groups of 4 to 6 carbon atoms. Specific examples of such diester compounds (II) include dihexyl adipate, di(2-butoxyethyl)adipate, di(2-(2-butoxyethoxy)ethyl)adipate, dinonyl adipate, and 1,2-cyclohexane dicarboxylic acid dinonyl ester. Particularly preferred are dihexyl adipate, di(2-butoxyethyl) adipate, and di(2-(2-butoxyethoxy)ethyl)adipate.

The diester compound (II) has a good balance between compatibility with polyvinyl acetal, and the plasticizing effect for polyvinyl acetal. However, the diester compound (II) may cause bleeding when a composition containing polyvinyl acetal and a relatively large amount of diester compound (II) is handled at low temperatures (for example, 5°C or less). Because the composition of the present invention contains the compound (I) as an essential component, such low-temperature bleeding is less likely to occur in the composition of the present invention, even when the diester compound (II) is contained in relatively large amounts.

When the content of the diester compound (II) with respect to 100 parts by mass of the polyvinyl acetal is Y parts by mass in the composition of the present invention, Y is 5 to 60, preferably 10 to 55, further preferably 20 to 50. When Y is less than 5, the sound insulation performance may become insufficient when the composition of the present invention is used as an intermediate film for laminated glass. On the other hand, when Y is larger than 60, the components may bleed when the composition of the present invention is stored at low temperatures (for example, 5°C or less)

In the composition of the present invention, it is preferable that X < Y. More preferably, X < Y, and the difference between X and Y is larger than 5. Further preferably, the difference between X and Y is larger than 10. When X is equal to or greater than Y, extraction of a component may occur when the composition of the present invention is brought into contact with water, or the sound insulation performance may not develop sufficiently when the composition of the present invention is used as an intermediate film for laminated glass.

In the composition of the present invention, X + Y = 42 to 120, preferably X + Y = 44 to 100, more preferably X + Y = 46 to 85. When X + Y is less than 42, the sound insulation performance may become insufficient when the composition of the present invention is used as an intermediate film for laminated glass. When X + Y is above 120, the mechanical strength of the composition of the present invention may become insufficient.

When the composition of the present invention is produced by using a melt kneader such as an extruder, it is preferable to supply a mixture of the compound (I) and the diester compound (II) to the extruder. By supplying the compound (I) and the diester compound (II) to the extruder in the form of a homogenous mixture, these compounds can be supplied to the extruder in stable proportions. For example, a mixture of X parts by mass of the plasticizer compound, and Y parts by mass of the diester compound (II) is preferably a homogenous liquid at 80°C, more preferably a homogenous liquid at 20°C, particularly preferably a homogenous solution at 0°C. The mixture is preferably a homogenous liquid at 80°C because such a mixture can be supplied to an extruder in stable proportions at 80°C or higher temperatures.

The composition of the present invention has a weight loss of preferably less than 2 mass%, more preferably less than 1 mass%, further preferably less than 0.6 mass% as measured when the composition is molded into a sheet measuring 5 cm in length, 5 cm in width, and 0.8 mm in thickness, and dipped in 92.5°C ± 0.5°C hot water for 2 hours. When the weight loss exceeds 2 mass%, the components contained in the composition of the present invention may become extracted in water, and bubbles may be generated at end portions of laminated glass, or detachment may occur between the glass and the intermediate film when the intermediate film for laminated glass contacts water during a long use of laminated glass containing the composition of the present invention as an intermediate film for laminated glass in an outdoor environment. Bleeding of the diester compound (II) may also occur when the composition is exposed to low temperature after such extraction has occurred.

The following describes the polyvinyl acetal contained in the composition of the present invention. The polyvinyl acetal used in the present invention is typically produced using a polyvinyl alcohol as feedstock. The polyvinyl alcohol can be obtained by using conventionally known techniques, specifically by polymerizing a carboxylic acid vinyl ester compound such as vinyl acetate, and saponifying the resulting polymer. The polymerization of a carboxylic acid vinyl ester compound may be achieved by using conventionally known methods, such as solution polymerization, bulk polymerization, suspension polymerization, and emulsification polymerization. The polymerization initiator may be appropriately selected according to the polymerization method, and, for example, an azo-based initiator, a peroxide-based initiator, and a redox-based initiator may be used. The saponification reaction may be performed by using, for example, alcoholysis or hydrolysis using conventionally known alkali catalysts or acid catalysts.

The polyvinyl alcohol may be a saponification product of a copolymer obtained through copolymerization of a carboxylic acid vinyl ester compound and other monomer, provided that it does not work against the gist of the present invention. Examples of such other monomers include, but are not limited to, α-olefins such as ethylene, propylene, n-butene, and isobutylene; acrylic acid esters such as methyl acrylate, ethyl acrylate, n-butyl acrylate, i-butyl acrylate, t-butyl acrylate, 2-ethylhexyl acrylate, dodecyl acrylate, and octadecyl acrylate; methacrylic acid esters such as methyl methacrylate, ethyl methacrylate, n-butyl methacrylate, i-butyl methacrylate, t-butyl methacrylate, 2-ethylhexyl methacrylate, dodecyl methacrylate, and octadecyl methacrylate; acrylamides and derivatives thereof, such as acrylamide, N-methylacrylamide, N-ethylacrylamide, N,N-dimethylacrylamide, diacetone acrylamide, acrylamide propanesulfonic acid and salts thereof, acrylamide propyldimethyl amine and salts and quaternary salts thereof, and N-methylolacrylamide and derivatives thereof; methacrylamides and derivatives thereof, such as methacrylamide, N-methylmethacrylamide, N-ethylmethacrylamide, methacrylamide propanesulfonic acid and salts thereof, methacrylamide propyldimethyl amine and salts and quaternary salts thereof, and N-methylolmethacrylamide and derivatives thereof; vinyl ethers such as methyl vinyl ether, ethyl vinyl ether, n-butyl vinyl ether, i-butyl vinyl ether, t-butyl vinyl ether, dodecyl vinyl ether, and stearyl vinyl ether; nitriles such as acrylonitrile, and methacrylonitrile; halogenated vinyl such as vinyl chloride, and vinyl fluoride; halogenated vinylidene such as vinylidene chloride, and vinylidene fluoride; allyl compounds such as allyl acetate, and allyl chloride; vinyl silyl compounds such as maleic acid esters or maleic acid anhydrides, and vinyl trimethoxysilane; and isopropenyl acetate. When copolymerizing these monomers, the monomer is typically used in a proportion of less than 10 mol% with respect to the carboxylic acid vinyl ester compound.

The viscosity average degree of polymerization of the polyvinyl alcohol as feedstock of the polyvinyl acetal used in the present invention is not particularly limited, and may be appropriately selected according to use. Preferably, the viscosity average degree of polymerization of the polyvinyl alcohol is 150 to 3,500, more preferably 200 to 2,500, further preferably 1,500 to 2,500. The mechanical strength of the composition of the present invention may become insufficient when the viscosity average degree of polymerization is less than 150. Above 3,500, the solubility in a solvent, or the processibility of melting may suffer.

The polyvinyl acetal used in the present invention may be obtained, for example, as follows. However, the method is not limited to the following. First, a 3 to 30 mass% polyvinyl alcohol aqueous solution is maintained in a temperature range of 80 to 100°C, and is allowed to cool over a time period of 10 to 60 minutes. An aldehyde and an acid catalyst are added upon the temperature dropping to - 10 to 30°C, and an acetalization reaction is performed at the maintained temperature for 30 to 300 minutes. The reaction liquid is then raised to a temperature of 20 to 80°C over a time period of 30 to 200 minutes, and the temperature is maintained for 30 to 300 minutes. Thereafter, the reaction liquid is neutralized by adding a neutralizing agent such as an alkali, as required, and the resin is water washed, and dried to obtain the polyvinyl acetal used in the present invention.

The acid catalyst used in the acetalization reaction is not particularly limited, and may be an organic acid or an inorganic acid. Examples of the acid catalyst include acetic acid, para-toluenesulfonic acid, nitric acid, sulfuric acid, and hydrochloric acid. Preferred are hydrochloric acid, sulfuric acid, and nitric acid.

The aldehyde used in the acetalization reaction is not particularly limited, and is preferably an aldehyde of 1 to 8 carbon atoms. Examples of aldehydes of 1 to 8 carbon atoms include formaldehyde, acetaldehyde, propionaldehyde, n-butyraldehyde, isobutyraldehyde, n-hexylaldehyde, 2-ethylbutyraldehyde, n-octylaldehyde, 2-ethylhexylaldehyde, and benzaldehyde. These may be used alone or in a combination of two or more. Preferred for use are aldehydes of 2 to 5 carbon atoms, particularly aldehydes of 4 carbon atoms, such as n-butyraldehyde, and isobutyraldehyde because of advantages including easy availability, easy removability of residual aldehydes by water washing and drying after the acetalization reaction, and the desirable mechanical characteristics of the product polyvinyl acetal.

The average amount of residual hydroxyl group in the polyvinyl acetal used in the present invention is 15 to 50 mol%, preferably 17 to 42 mol%, more preferably 23 to 35 mol%, further preferably 23 to 33 mol%, particularly preferably 25 to 33 mol%, most preferably 26 to 33 mol%. When the average amount of residual hydroxyl group is less than 15 mol%, the mechanical strength of the composition of the present invention may become insufficient, or compatibility with the compound (I) or the diester compound (II) may suffer. Above 50 mol%, the composition of the present invention may become more absorbent of water, or compatibility with the compound (I) or the diester compound (II) may suffer.

The average degree of acetalization of the polyvinyl acetal used in the present invention is not particularly limited, and is preferably 40 to 84 mol%, more preferably 45 to 80 mol%, further preferably 50 to 76 mol%, particularly preferably 60 to 74 mol%, even more preferably 66 to 73 mol%. A polyvinyl acetal with an average degree of acetalization of the polyvinyl acetal of less than 40 mol% is not preferable in terms of compatibility with the compound (I) or the diester compound (II). A polyvinyl acetal with an average degree of acetalization of above 84 mol% is difficult to produce at low cost in industrial settings, and the mechanical strength of the product composition may suffer.

The average amount of residual vinyl ester group of the polyvinyl acetal used in the present invention is not particularly limited, and is preferably 0.1 to 15 mol%, more preferably 0.1 to 10 mol%, further preferably 0.1 to 5 mol%. A polyvinyl acetal with an average amount of residual vinyl ester group of less than 0.1 mol% is difficult to produce at low cost in industrial settings. A polyvinyl acetal with an average amount of residual vinyl ester group of above 15 mol% may become cosmetically unappealing as it colors during a long use.

The composition of the present invention may further contain known additives, such as plasticizers, antioxidants, ultraviolet absorbers, and other additives, provided that such addition is not detrimental to the effects of the present invention.

An adhesion improver (adhesion adjuster) may be added when the composition of the present invention is used in applications such as an intermediate film for laminated glass where the composition is adjusted to have appropriate adhesion for glass. The adhesion improver may be a conventionally known adhesion improver, including, for example, alkali metal salts and alkali-earth metal salts such as sodium acetate, potassium acetate, magnesium acetate, and magnesium butyrate. The addition amount of adhesion improver is not particularly limited, and may be adjusted so that, for example, the pummel value obtained in a pummel test becomes suited for the intended purpose.

The composition of the present invention is obtained by mixing the polyvinyl acetal, the compound (I), the diester compound (II), and, as required, other components, using a conventionally known method. Examples of the method that may be used for mixing include, but are not limited to, melt kneading using, for example, a mixing roll, a plastomill, or an extruder, and methods that involve dissolving each component in a suitable organic solvent, and evaporating the solvent. Melt kneading is preferred in terms of producing the composition at low cost.

A sheet obtained by molding the polyvinyl acetal composition of the present invention (for example, by extrusion molding, or compression molding) is particularly preferred for use in intermediate films for laminated glass.

Also preferred is a multilayer intermediate film for laminated glass that has at least one layer of the sheet of the present invention, and at least one other layer containing a thermoplastic resin. The other layer containing a thermoplastic resin may contain polyvinyl acetal or some other resin as the thermoplastic resin, or may contain a plasticizer. The plasticizer may be the same plasticizer contained in the polyvinyl acetal composition of the present invention, or some other plasticizer.

The thickness of the sheet is not particularly limited, and typically ranges from preferably 0.01 to 5 mm, more preferably 0.05 to 3 mm, further preferably 0.1 to 1.6 mm. The lower limit thickness of the multilayer intermediate film for laminated glass of the present invention is 0.1 mm, preferably 0.2 mm, more preferably 0.3 mm, further preferably 0.4 mm, particularly preferably 0.5 mm, even more preferably 0.6 mm, especially preferably 0.7 mm, optimally 0.75 mm. The upper limit is 5 mm, preferably 4 mm, more preferably 2 mm, further preferably 1.6 mm, particularly preferably 1.2 mm, even more preferably 1.1 mm, especially preferably 1 mm, optimally 0.79 mm.

When the sheet of the present invention is used as an intermediate film for laminated glass, or a multilayer intermediate film for laminated glass, the glass laminated to the intermediate film for laminated glass, or to the multilayer intermediate film for laminated glass of the present invention is not particularly limited. Non-limiting examples of the glass include inorganic glasses such as float plate glass, polished plate glass, figured glass, wire-reinforced plate glass, and heat-absorbing plate glass; and conventionally known organic glasses such as polymethylmethacrylate, and polycarbonate. These may be colorless or colored. These may be used alone or in a combination of two or more. The glass thickness is not particularly limited, and the preferred thickness is typically 100 mm or less.

When the sheet of the present invention is used as an intermediate film for laminated glass, or a multilayer intermediate film for laminated glass, the surface shape of the sheet or the surface shape of the multilayer intermediate film for laminated glass is not particularly limited. However, it is preferable that the sheet or the multilayer intermediate film for laminated glass has a concavo-convexstructure because it provides desirable bubble removal during thermocompression of glass with the sheet or the multilayer intermediate film for laminated glass.

A laminated glass obtained by using the intermediate film for laminated glass, or the multilayer intermediate film for laminated glass of the present invention also constitutes the present invention. Such a laminated glass can be produced by using conventionally known methods, including, for example, methods that use a vacuum laminator, methods that use a vacuum bag, methods that use a vacuum ring, and methods that use a nip roll. It is also possible to use a method that feeds a temporarily pressed glass from these methods to an autoclave for final bonding.

### Examples

The present invention is described in greater detail referring to Examples. The present invention, however, is in no way limited by the following Examples.

### Production Example 1

4,000grams of ion-exchange water, and 400 grams of polyvinyl alcohol (viscosity average degree of polymerization = 1,700, degree of saponification = 99 mol%) were charged into a 5-liter glass container equipped with a reflux condenser, a thermometer, and anchor-shaped stirring vanes. The mixture was raised to 95°C to completely dissolve the polyvinyl alcohol. The resulting solution was allowed to cool to 10°C over a time period of about 30 min while being stirred at 120 rpm, and 226 g of butyraldehyde and 200 mL of a 20 mass% hydrochloric acid aqueous solution were added. The mixture was raised to 65°C over a time period of 60 min, maintained at 65°C for 120 min, and cooled to room temperature. After washing the resulting resin with ion-exchange water, the residual acid was neutralized by adding a sodium hydroxide aqueous solution, and the product was washed with excess ion-exchange water, and dried to obtain a polyvinyl butyral (PVB-1). Analyses of PVB-1 according to JIS K6728 revealed that the average degree of butyralization (average degree of acetalization) was 68 mol%, the average amount of residual vinyl ester group was 1 mol%, and the average amount of residual hydroxyl group was 31 mol%.

### Production Example 2

A polyvinyl butyral (PVB-2) was obtained in the same manner as in Production Example 1, except that the butyraldehyde was used in an amount of 240 g. Analyses of PVB-2 according to JIS K6728 revealed that the average degree of butyralization (average degree of acetalization) was 72 mol%, the average amount of residual vinyl ester group was 1 mol%, and the average amount of residual hydroxyl group was 27 mol%.

### Production Example 3

A polyvinyl butyral (PVB-3) was obtained in the same manner as in Production Example 1, except that the butyraldehyde was used in an amount of 213 g. Analyses of PVB-3 according to JIS K6728 revealed that the average degree of butyralization (average degree of acetalization) was 64 mol%, the average amount of residual vinyl ester group was 1 mol%, and the average amount of residual hydroxyl group was 35 mol%.

### Production Example 4

A polyvinyl butyral (PVB-4) was obtained in the same manner as in Production Example 1, except that the butyraldehyde was used in an amount of 270 g. Analyses of PVB-4 according to JIS K6728 revealed that the average degree of butyralization (average degree of acetalization) was 78 mol%, the average amount of residual vinyl ester group was 1 mol%, and the average amount of residual hydroxyl group was 21 mol%.

### Example 1

100 parts by mass of PVB-1, 15 parts by mass of PEs-1 (a condensation polymerization polyester-based alcohol compound obtained by condensation polymerization of 3-methyl-1,5-pentanediol and adipic acid; hydroxyl number = 220 mgKOH/g, number average molecular weight based on hydroxyl number = 510), 45 parts by mass of triethylene glycol di-2-ethylhexanoate (3G8), 0.08 parts by mass of an antioxidant BHT (2,6-di-t-butyl-4-hydroxytoluene), and 0.15 parts by mass of an UV absorber 2-(3,5-di-tert-amyl-2-hydroxyphenyl)benzotriazole (trade name: Tinuvin 328; manufactured by Ciba) were stirred, and coarsely mixed in a beaker. The mixture was then melt kneaded with a laboplasto mill (150°C, 7 min) to obtain a composition-1. The composition-1 was pressed at 150°C under 50 kg/cm² for 30 min to fabricate a sheet-1 having a thickness of 0.8 mm. The sheet-1 was sandwiched between a pair of float glass plates each measuring 300 mm x 300 mm x 3 mm, and temporarily bonded with a nip roll. The laminate was then processed in an autoclave at 140°C under 1.2 MPa for 30 min to obtain a laminated glass-1.

### Haze Measurement

The laminated glass-1 was cut into a 5 cm x 5 cm size, and measured for haze using a haze meter (HZ-1) available from Suga Test Instruments Co., Ltd. The haze was 0.2%.

### Loss Factor Measurement

The laminated glass-1 was cut into a 2.5 cm x 30 cm size, and vibrated in a 20°C atmosphere using a vibrator (Small Vibrator 512-A, manufactured by EMIC). An FFT analyzer (Ono Sokki Co., Ltd., DS-2100) was used to detect the frequency response function, and a loss factor at 3,000Hz was calculated using servo analysis software (Ono Sokki Co., Ltd., DS-0242). Larger loss factors mean that the laminated glass has better sound insulation performance.

### Low-Temperature Bleed Test

The sheet-1 was humidified to make the water content 0.5%, and stored at 5°C for 1 week. After storage, the sheet surface was gently wiped with tissue paper, and the presence or absence of the plasticizer on the tissue paper was visually inspected for evaluation. Samples were labeled "Present" when the plasticizer adhered to the tissue paper, and "Absent" when the plasticizer did not adhere to the tissue paper.

### Hot Water Dipping (Sheet)

The sheet-1 was cut into a 5 cm x 5 cm size (about 2 g weight), and dried in a desiccator to make the water content less than 0.1% (here, the mass of the sheet-1 is a "mass before testing"). The sheet-1 was then dipped in 500 mL of 92.5 ± 2.5°C hot water for 2 h (maintained at 92.5 ± 2.5°C), and dried in a desiccator to obtain a tested sheet-1 (here, the mass of the sheet-1 is a "mass after testing"). The weight loss rate before and after the testing was then calculated as follows.

Weight loss rate before and after testing = ((mass before testing - mass after testing)/mass before testing)

The tested sheet-1 was subjected to the same low-temperature bleed test performed above to determine the presence or absence of plasticizer bleeding.

### Hot Water Dipping (Laminated Glass)

The laminated glass-1 was cut into a 10 cm x 10 cm size, and dipped in 50 mL of 92.5 ± 2.5°C hot water for 2 h (maintained at 92.5 ± 2.5°C). After being processed, the laminated glass was visually inspected for occurrence of bubbles in the glass.

### Compatibility between Compound (I) and Diester Compound (II)

X parts by mass of compound (I), and Y parts by mass of diester compound (II) were put in a flask to make the total amount 50 g, and the mixture was stirred at 80°C or at 20°C for 30 min using a rotor and a magnetic stirrer. The resulting liquid immediately after the stirring was visually inspected to determine whether the liquid turned into a homogenous transparent liquid. Samples that were homogenous transparent solutions were labeled "Homogenous", and samples that were not homogenous transparent solutions were labeled "Non-Homogenous".

### Examples 2 to 29, and Comparative Examples 1 to 6

The polyester-based alcohol compounds (PEs-1 to 7) shown in Table 1 were tested in the same manner as in Example 1, except that these were used in the compositions shown in Table 2 or 3. The results are presented in Table 2 or 3.

### Examples 30 to 46, and Comparative Examples 7 to 10

Tests were performed in the same manner as in Example 1, except that the plasticizer compounds having a bisphenol ether skeleton (BP-1 to 7) shown in Table 4 were used as compound (I) in the compositions shown in Table 4. The results are presented in Table 5.

### (Examples 47 to 64, and Comparative Examples 11 to 16)

Tests were performed in the same manner as in Example 1, except that the unsaturated carboxylic acid ester compounds (CEs-1 to 6) shown in Table 6 were used as compound (I) in the compositions shown in Table 7 or 8. The results are presented in Table 7 or 8.

**[Table 1]**

| | Chemical structure | Hydroxyl number (mgKOH/g) | Number average molecular weight based on hydroxyl number |
|---|---|---|---|
| PEs-1 | Condensation polymerization polyester-based alcohol compound obtained by condensation polymerization of 3-methyl-1,5-pentanediol and adipic acid | 220 | 510 |
| PEs-2 | Condensation polymerization polyester-based alcohol compound obtained by condensation polymerization of 3-methyl-1,5-pentanediol and adipic acid | 150 | 750 |
| PEs-3 | Condensation polymerization polyester-based alcohol compound obtained by condensation polymerization of 3-methyl-1,5-pentanediol and sebacic acid | 200 | 560 |
| PEs-4 | Condensation polymerization polyester-based alcohol compound obtained by condensation polymerization of 1,8-nonanediol and adipic acid | 120 | 930 |
| PEs-5 | Condensation polymerization polyester-based alcohol compound obtained by condensation polymerization of 3-methyl-1,5-pentanediol and adipic acid | 80 | 1400 |
| PEs-6 | Hydroxycarboxylic acid ester-based alcohol compound after addition polymerization of ethylene glycol with ε-caprolactone | 210 | 530 |
| PEs-7 | Condensation polymerization polyester-based alcohol compound obtained by reaction of 3-methyl-1,5-pentanediol and diethyl carbonate | 180 | 620 |

**[Table 2]**

| | PVB (100 parts by mass) | Polyester-based alcohol compound | | Diester compound | | X + Y (parts by mass) | Haze (%) | Loss factor | Low-temperature bleed | Dipping in hot water (sheet) | | Dipping in hot water (laminated glass) | Compatibility between polyester-based alcohol compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 1 | PVB-1 | PEs-1 | 15 | 3G8 | 45 | 60 | 0.2 | 0.28 | Absent | 0.4 | Absent | Absent | Compatible | Compatible |
| Ex. 2 | PVB-1 | PEs-1 | 20 | 3G8 | 35 | 55 | 0.2 | 0.26 | Absent | 0.5 | Absent | Absent | Compatible | Compatible |
| Ex. 3 | PVB-1 | PEs-1 | 15 | 3G8 | 30 | 45 | 0.2 | 0.14 | Absent | 0.4 | Absent | Absent | Compatible | Compatible |
| Ex. 4 | PVB-1 | PEs-1 | 35 | 3G8 | 20 | 55 | 0.2 | 0.25 | Absent | 1.2 | Absent | Several at end portions | Homogenous | Homogenous |
| Ex. 5 | PVB-1 | PEs-1 | 20 | 3G8 | 50 | 70 | 0.3 | 0.27 | Absent | 0.5 | Absent | Absent | Homogenous | Homogenous |
| Ex. 6 | PVB-1 | PEs-1 | 15 | DHA | 45 | 60 | 0.4 | 0.28 | Absent | 0.4 | Absent | Absent | Homogenous | Homogenous |
| Ex. 7 | PVB-1 | PEs-1 | 20 | DHA | 35 | 55 | 0.3 | 0.27 | Absent | 0.4 | Absent | Absent | Homogenous | Homogenous |
| Ex. 8 | PVB-2 | PEs-1 | 20 | 3G8 | 35 | 55 | 0.2 | 0.27 | Absent | 0.5 | Absent | Absent | Homogenous | Homogenous |
| Ex. 9 | PVB-2 | PEs-1 | 35 | 3G8 | 20 | 55 | 0.2 | 0.26 | Absent | 1.1 | Absent | Several at end portions | Homogenous | Homogenous |
| Ex. 10 | PVB-1 | PEs-2 | 15 | 3G8 | 45 | 60 | 0.3 | 0.26 | Absent | 0.3 | Absent | Absent | Homogenous | Homogenous |
| Ex. 11 | PVB-1 | PEs-2 | 20 | 3G8 | 35 | 55 | 0.2 | 0.25 | Absent | 0.3 | Absent | Absent | Homogenous | Homogenous |
| Ex. 12 | PVB-1 | PEs-2 | 15 | 3G8 | 30 | 45 | 0.2 | 0.13 | Absent | 0.3 | Absent | Absent | Homogenous | Homogenous |
| Ex. 13 | PVB-1 | PEs-3 | 15 | 3G8 | 45 | 60 | 0.3 | 0.26 | Absent | 0.3 | Absent | Absent | Homogenous | Homogenous |
| Ex. 14 | PVB-1 | PEs-4 | 15 | 3G8 | 45 | 60 | 0.4 | 0.24 | Absent | 0.3 | Absent | Absent | Homogenous | Homogenous |
| Ex. 15 | PVB-1 | PEs-5 | 15 | 3G8 | 45 | 60 | 0.4 | 0.21 | Absent | 0.2 | Absent | Absent | Homogenous | Homogenous |
| Ex. 16 | PVB-1 | PEs-6 | 15 | 3G8 | 45 | 60 | 0.3 | 0.27 | Absent | 0.3 | Absent | Absent | Homogenous | Homogenous |
| Ex. 17 | PVB-1 | PEs-6 | 20 | 3G8 | 35 | 55 | 0.2 | 0.26 | Absent | 0.3 | Absent | Absent | Homogenous | Homogenous |
| Ex. 18 | PVB-1 | PEs-6 | 15 | 3G8 | 30 | 45 | 0.2 | 0.13 | Absent | 0.2 | Absent | Absent | Homogenous | Homogenous |
| Ex. 19 | PVB-1 | PEs-6 | 35 | 3G8 | 20 | 55 | 0.2 | 0.23 | Absent | 0.4 | Absent | Absent | Homogenous | Homogenous |
| Ex. 20 | PVB-1 | PEs-6 | 20 | 3G8 | 50 | 70 | 0.3 | 0.25 | Absent | 0.3 | Absent | Absent | Homogenous | Homogenous |

| | | | | | | | | | | | | | | |
|---|---|---|---|---|---|---|---|---|---|---|---|---|---|---|
| 3G8: Triethylene glycol di-2-ethylhexanoate, DHA: Dihexyl adipate | | | | | | | | | | | | | | |

**[Table 3]**

| | PVB (100 parts by mass) | Polyester-based alcohol compound | | Diester compound | | X + Y (parts by mass) | Haze (%) | Loss factor | Low-temperature bleed | Dipping in hot water (sheet) | | Dipping in hot water (laminated glass) | Compatibility between polyester-based alcohol compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 21 | PVB-1 | PEs-6 | 20 | DHA | 35 | 55 | 0.2 | 0.26 | Absent | 0.3 | Absent | Absent | Homogenous | Homogenous |
| Ex. 22 | PVB-1 | PEs-6 | 15 | DHA | 45 | 60 | 0.2 | 0.26 | Absent | 0.2 | Absent | Absent | Homogenous | Homogenous |
| Ex. 23 | PVB-1 | PEs-7 | 15 | 3G8 | 45 | 60 | 0.4 | 0.27 | Absent | 0.3 | Absent | Absent | Homogenous | Homogenous |
| Ex. 24 | PVB-1 | PEs-7 | 20 | 3G8 | 35 | 55 | 0.2 | 0.25 | Absent | 0.3 | Absent | Absent | Homogenous | Homogenous |
| Ex. 25 | PVB-1 | PEs-7 | 15 | 3G8 | 30 | 45 | 0.2 | 0.14 | Absent | 0.3 | Absent | Absent | Homogenous | Homogenous |
| Ex. 26 | PVB-1 | PEs-7 | 35 | 3G8 | 20 | 55 | 0.2 | 0.23 | Absent | 0.3 | Absent | Absent | Homogenous | Homogenous |
| Ex. 27 | PVB-1 | PEs-7 | 20 | 3G8 | 50 | 70 | 0.4 | 0.24 | Absent | 0.3 | Absent | Absent | Homogenous | Homogenous |
| Ex. 28 | PVB-1 | PEs-7 | 20 | DHA | 35 | 55 | 0.2 | 0.25 | Absent | 0.3 | Absent | Absent | Homogenous | Homogenous |
| Ex. 29 | PVB-1 | PEs-7 | 15 | DHA | 45 | 60 | 0.3 | 0.26 | Absent | 0.2 | Absent | Absent | Homogenous | Homogenous |
| Com. Ex. 1 | PVB-1 | PEs-1 | 15 | 3G8 | 15 | 30 | 0.2 | 0.03 | Absent | 0.4 | Absent | Absent | Homogenous | Homogenous |
| Com. Ex. 2 | PVB-1 | PEs-1 | 0 | 3G8 | 55 | 55 | 0.4 | 0.28 | Present | 0.5 | Absent | Absent | - | - |
| Com. Ex. 3 | PVB-1 | PEs-1 | 55 | 3G8 | 0 | 55 | 0.3 | 0.26 | Absent | 2.3 | Absent | Many at end portions | - | - |
| Com. Ex. 4 | PVB-1 | PEs-1 | 55 | 3G8 | 30 | 85 | 1.2 | 0.26 | Absent | 2.5 | Slightly present | Many at end portions | Homogenous | Homogenous |
| Com. Ex. 5 | PVB-1 | PEG-1 *1 | 15 *3 | 3G8 | 45 | 60 *4 | Plasticizer bled at room temperature (not evaluated) | | | | | | Non-homogenous* 5 | Non-homogenous* 5 |
| Com. Ex. 6 | PVB-1 | PPG-1 *2 | 15 *3 | 3G8 | 45 | 60 *4 | 0.2 | 0.27 | Absent | 3.2 | Present | Many at end portions | Homogenous* 6 | Homogenous* 6 |

| | | | | | | | | | | | | | | |
|---|---|---|---|---|---|---|---|---|---|---|---|---|---|---|
| 3G8: Triethylene glycol di-2-ethylhexanoate, DHA: Dihexyl adipate *1: Polyethylene glycol; hydroxyl number 280 mgKOH/g; number average molecular weight based on hydroxyl number 400 *2: Polypropylene glycol; hydroxyl number 280 mgKOH/g; number average molecular weight based on hydroxyl number 400 *3: Amount of PEG-1 or PPG-1 with respect to 100 parts by mass of PVB *4: Total amount of PEG-1 or PPG-1 and diester compound *5: Evaluation as a mixture of 45 parts by mass of 3G8 and 15 parts by mass of PEG-1 *6: Evaluation as a mixture of 45 parts by mass of 3G8 and 15 parts by mass of PPG-1 | | | | | | | | | | | | | | |

**[Table 4]**

| | Compound | Chemical structure shown in formula 3 | | | | | | | | | Hydroxyl number (mgKOH/g) |
|---|---|---|---|---|---|---|---|---|---|---|---|
| | | R⁶ | R⁷ | R⁸ | R⁹ | R¹⁰ | R¹¹ | R¹² | R¹³ | Average of k + 1 | |
| BP-1 | Bisphenol ether compound | -CH₂-CH(-CH₃)- | -CH₂-CH(-CH₃)- | H | H | Methyl group | Methyl group | Absent | Absent | 7.2 | 287 |
| BP-2 | Bisphenol ether compound | -CH₂-CH(-CH₃)- | -CH₂-CH(-CH₃)- | H | H | Methyl group | Methyl group | Absent | Absent | 12.0 | 325 |
| BP-3 | Bisphenol ether compound | -CH₂-CH(-CH₃)- | -CH₂-CH(-CH₃)- | H | H | Methyl group | Methyl group | Absent | Absent | 3.3 | 240 |
| BP-4 | Bisphenol ether compound | -CH₂-CH(-CH₃)- | -CH₂-CH(-CH₃)- | Acetyl group | Acetyl group | Methyl group | Methyl group | Absent | Absent | 7.2 | <5 |
| BP-5 | Bisphenol ether compound | -CH₂-CH₂- | -CH₂-CH₂- | H | H | Methyl group | Methyl group | Absent | Absent | 5.5 | 345 |
| BP-6 | Bisphenol ether compound | -CH₂-CH₂- | -CH₂-CH₂- | H | H | Methyl group | Methyl group | Absent | Absent | 8.3 | 319 |
| BP-7 | Bisphenol A diacetate | - | - | - | - | - | - | - | - | - | <5 |

**[Table 5]**

| | PVB (100 parts by mass) | Plasticizer compound having bisphenol skeleton | | Diester compound | | X + Y (parts by mass) | Haze (%) | Loss factor | Low-temperature bleed | Dipping in hot water (sheet) | | Dipping in hot water (laminated glass) | Compatibility between plasticizer compound having bisphenol skeleton and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 30 | PVB-1 | BP-1 | 20 | 3G8 | 45 | 65 | 0.2 | 0.3 | Absent | 0.4 | Absent | Absent | Homogenous | Homogenous |
| Ex. 31 | PVB-1 | BP-1 | 25 | 3G8 | 40 | 65 | 0.2 | 0.28 | Absent | 0.5 | Absent | Absent | Homogenous | Homogenous |
| Ex. 32 | PVB-1 | BP-1 | 20 | 3G8 | 25 | 45 | 0.2 | 0.15 | Absent | 0.3 | Absent | Absent | Homogenous | Homogenous |
| Ex. 33 | PVB-1 | BP-1 | 35 | 3G8 | 30 | 65 | 0.2 | 0.28 | Absent | 0.8 | Absent | Absent | Homogenous | Homogenous |
| Ex. 34 | PVB-1 | BP-1 | 60 | 3G8 | 25 | 85 | 0.3 | 0.29 | Absent | 1.2 | Absent | Several at end portions | Homogenous | Homogenous |
| Ex. 35 | PVB-1 | BP-1 | 20 | DHA | 45 | 65 | 0.4 | 0.3 | Absent | 0.6 | Absent | Absent | Homogenous | Homogenous |
| Ex. 36 | PVB-1 | BP-1 | 25 | DHA | 40 | 65 | 0.3 | 0.28 | Absent | 0.6 | Absent | Absent | Homogenous | Homogenous |
| Ex. 37 | PVB-2 | BP-1 | 20 | 3G8 | 45 | 65 | 0.2 | 0.28 | Absent | 0.5 | Absent | Absent | Homogenous | Homogenous |
| Ex. 38 | PVB-2 | BP-1 | 35 | 3G8 | 30 | 65 | 0.2 | 0.27 | Absent | 0.7 | Absent | Absent | Homogenous | Homogenous |
| Ex. 39 | PVB-1 | BP-2 | 20 | 3G8 | 45 | 65 | 0.3 | 0.25 | Absent | 0.3 | Absent | Absent | Homogenous | Homogenous |
| Ex. 40 | PVB-1 | BP-2 | 25 | 3G8 | 40 | 65 | 0.2 | 0.25 | Absent | 0.3 | Absent | Absent | Homogenous | Homogenous |
| Ex. 41 | PVB-1 | BP-2 | 20 | 3G8 | 25 | 45 | 0.2 | 0.13 | Absent | 0.2 | Absent | Absent | Homogenous | Homogenous |
| Ex. 42 | PVB-1 | BP-3 | 20 | 3G8 | 45 | 65 | 0.3 | 0.35 | Absent | 0.3 | Absent | Absent | Homogenous | Homogenous |
| Ex. 43 | PVB-1 | BP-4 | 20 | 3G8 | 45 | 65 | 0.4 | 0.26 | Absent | 0.1 | Absent | Absent | Homogenous | Homogenous |
| Ex. 44 | PVB-1 | BP-5 | 20 | 3G8 | 45 | 65 | 0.4 | 0.23 | Absent | 0.6 | Absent | Absent | Homogenous | Homogenous |
| Ex. 45 | PVB-1 | BP-6 | 20 | 3G8 | 45 | 65 | 0.3 | 0.29 | Absent | 0.7 | Absent | Absent | Homogenous | Homogenous |
| Ex. 46 | PVB-1 | BP-7 | 20 | 3G8 | 45 | 65 | 0.4 | 0.35 | Absent | 0.1 | Absent | Absent | Homogenous | Homogenous |
| Com. Ex. 7 | PVB-1 | BP-1 | 15 | 3G8 | 20 | 35 | 0.2 | 0.04 | Absent | 0.4 | Absent | Absent | Homogenous | Homogenous |
| Com. Ex. 8 | PVB-1 | BP-1 | 0 | 3G8 | 55 | 55 | 0.4 | 0.28 | Present | 0.5 | Absent | Absent | - | - |
| Com. Ex. 9 | PVB-1 | BP-1 | 55 | 3G8 | 0 | 55 | 0.3 | 0.17 | Absent | 2.3 | Absent | Many at end portions | - | - |
| Com. Ex. 10 | PVB-1 | BP-1 | 100 | 3G8 | 25 | 125 | 1.2 | 0.28 | Absent | 2.5 | Slightly present | Many at end portions | Homogenous | Homogenous |

| | | | | | | | | | | | | | | |
|---|---|---|---|---|---|---|---|---|---|---|---|---|---|---|
| 3G8: Triethylene glycol di-2-ethylhexanoate, DHA: Dihexyl adipate | | | | | | | | | | | | | | |

**[Table 6]**

| | Chemical structure | Hydroxyl number (mgKOH/g) | Number average molecular weight based on hydroxyl number |
|---|---|---|---|
| CEs-1 | Ethylene glycol monoricinoleate | 327 | 342 |
| CEs-2 | Propylene glycol monoricinoleate | 315 | 356 |
| CEs-3 | Castor oil | 160 | 910 |
| CEs-4 | Methyl ricinoleate | 179 | 312 |
| CEs-5 | Butyl ricinoleate | 158 | 354 |
| CEs-6 | Butyl oleate | <1 | 338 *1 |

| | | | |
|---|---|---|---|
| *1: Molecular weight | | | |

**[Table 7]**

| | PVB (100 parts by mass) | Unsaturated carboxylic acid ester compound | | Diester compound | | X + Y (parts by mass) | Haze (%) | Loss factor | Low-temperature bleed | Dipping in hot water (sheet) | | Dipping in hot water (laminated glass) | Compatibility between unsaturated carboxylic acid ester compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 47 | PVB-1 | CEs-1 | 15 | 3G8 | 40 | 55 | 0.2 | 0.28 | Absent | 0.4 | Absent | Absent | Homogenous | Homogenous |
| Ex. 48 | PVB-1 | CEs-1 | 20 | 3G8 | 30 | 50 | 0.2 | 0.27 | Absent | 0.5 | Absent | Absent | Homogenous | Homogenous |
| Ex. 49 | PVB-1 | CEs-1 | 15 | 3G8 | 30 | 45 | 0.2 | 0.25 | Absent | 0.4 | Absent | Absent | Homogenous | Homogenous |
| Ex. 50 | PVB-1 | CEs-1 | 35 | 3G8 | 15 | 50 | 0.2 | 0.15 | Absent | 0.7 | Absent | Absent | Homogenous | Homogenous |
| Ex. 51 | PVB-1 | CEs-1 | 20 | 3G8 | 45 | 65 | 0.2 | 0.27 | Absent | 0.5 | Absent | Absent | Homogenous | Homogenous |
| Ex. 52 | PVB-1 | CEs-1 | 15 | DHA | 40 | 55 | 0.4 | 0.28 | Absent | 0.3 | Absent | Absent | Homogenous | Homogenous |
| Ex. 53 | PVB-1 | CEs-1 | 20 | DHA | 30 | 50 | 0.2 | 0.27 | Absent | 0.4 | Absent | Absent | Homogenous | Homogenous |
| Ex. 54 | PVB-2 | CEs-1 | 20 | 3G8 | 30 | 50 | 0.2 | 0.29 | Absent | 0.5 | Absent | Absent | Homogenous | Homogenous |
| Ex. 55 | PVB-2 | CEs-1 | 35 | 3G8 | 15 | 50 | 0.2 | 0.27 | Absent | 0.7 | Absent | Absent | Homogenous | Homogenous |
| Ex. 56 | PVB-1 | CEs-2 | 15 | 3G8 | 40 | 55 | 0.2 | 0.28 | Absent | 0.7 | Absent | Absent | Homogenous | Homogenous |
| Ex. 57 | PVB-1 | CEs-2 | 20 | 3G8 | 30 | 50 | 0.2 | 0.27 | Absent | 0.6 | Absent | Absent | Homogenous | Homogenous |
| Ex. 58 | PVB-1 | CEs-2 | 15 | 3G8 | 30 | 45 | 0.3 | 0.15 | Absent | 0.6 | Absent | Absent | Homogenous | Homogenous |
| Ex. 59 | PVB-1 | CEs-3 | 15 | 3G8 | 40 | 55 | 0.4 | 0.26 | Absent | 0.3 | Absent | Absent | Homogenous | Homogenous |
| Ex. 60 | PVB-1 | CEs-4 | 15 | 3G8 | 40 | 55 | 0.4 | 0.28 | Absent | 0.3 | Absent | Absent | Homogenous | Homogenous |

| | | | | | | | | | | | | | | |
|---|---|---|---|---|---|---|---|---|---|---|---|---|---|---|
| 3G8: Triethylene glycol di-2-ethylhexanoate, DHA: Dihexyl adipate | | | | | | | | | | | | | | |

**[Table 8]**

| | PVB (100 parts by mass) | Unsaturated carboxylic acid ester compound | | Diester compound | | X + Y (parts by mass) | Haze (%) | Loss factor | Low-temperature bleed | Dipping in hot water (sheet) | | Dipping in hot water (laminated glass) | Compatibility between unsaturated carboxylic acid ester compound and diester compound | |
|---|---|---|---|---|---|---|---|---|---|---|---|---|---|---|
| | | Type | X (parts by mass) | Type | Y (parts by mass) | | | | | Weight loss (mass%) | Low-temperature bleed | Bubbling | 80°C | 20°C |
| Ex. 61 | PVB-1 | CEs-5 | 15 | 3G8 | 40 | 55 | 0.4 | 0.28 | Absent | 0.2 | Absent | Absent | Homogenous | Homogenous |
| Ex. 62 | PVB-1 | CEs-6 | 15 | 3G8 | 40 | 55 | 0.3 | 0.27 | Absent | 0.3 | Absent | Absent | Homogenous | Homogenous |
| Ex. 63 | PVB-3 | CEs-1 | 15 | 3G8 | 40 | 55 | 0.2 | 0.13 | Present | 0.4 | Absent | Absent | Homogenous | Homogenous |
| Ex. 64 | PVB-4 | CEs-1 | 15 | 3G8 | 40 | 55 | 0.2 | 0.23 | Absent | 2.1 | Present | Many at end portions | Homogenous | Homogenous |
| Com. Ex. 11 | PVB-1 | CEs-1 | 15 | 3G8 | 15 | 30 | 0.2 | 0.04 | Absent | 0.4 | Absent | Absent | Homogenous | Homogenous |
| Com. Ex. 12 | PVB-1 | CEs-1 | 0 | 3G8 | 55 | 55 | 0.4 | 0.28 | Present | 0.5 | Absent | Absent | - | - |
| Com. Ex. 13 | PVB-1 | CEs-1 | 55 | 3G8 | 0 | 55 | 0.3 | 0.28 | Absent | 2.3 | Absent | Many at end portions | - | - |
| Com. Ex. 14 | PVB-1 | CEs-1 | 55 | 3G8 | 30 | 85 | 1.4 | 0.22 | Absent | 2.4 | Slightly present | Many at end portions | Homogenous | Homogenous |
| Com. Ex. 15 | PVB-1 | PEG-1 *1 | 15 *3 | 3G8 | 40 | 55 *4 | Plasticizer bled at room temperature (not evaluated) | | | | | | Non-homogenous *5 | Non-homogenous *5 |
| Com. Ex. 16 | PVB-1 | PPG-1 *2 | 15 *3 | 3G8 | 40 | 55 *4 | 0.2 | 0.27 | Absent | 3.2 | Present | Many at end portions | Homogenous *6 | Homogenous *6 |

| | | | | | | | | | | | | | | |
|---|---|---|---|---|---|---|---|---|---|---|---|---|---|---|
| 3G8: Triethylene glycol di-2-ethylhexanoate, DHA: Dihexyl adipate *1: Polyethylene glycol; hydroxyl number 280 mgKOH/g; number average molecular weight based on hydroxyl number 400 *2: Polypropylene glycol; hydroxyl number 280 mgKOH/g; number average molecular weight based on hydroxyl number 400 *3: Amount of PEG-1 or PPG-2 with respect to 100 parts by mass of PVB *4: Total amount of PEG-1 or PPG-1 and diester compound *5: Evaluation as a mixture of 45 parts by mass of 3G8 and 15 parts by mass of PEG-1 *6: Evaluation as a mixture of 45 parts by mass of 3G8 and 15 parts by mass of PPG-1 | | | | | | | | | | | | | | |

It can be seen from the results shown in Tables 2, 3, 5, and 7 to 8 that the compositions satisfying the conditions specified by the present invention do not cause a bleed in the plasticizer even when stored at low temperature, and that problems due to extraction of a component do not occur even when the compositions contact water. It can also been seen that a laminated glass having desirable sound insulation can be obtained when the sheet made from the compositions satisfying the conditions specified by the present invention is used as an intermediate film for laminated glass.

### Industrial Applicability

The composition of the present invention does not involve bleeding of a plasticizer even when stored at low temperature, or cause problems due to extraction of a component even when brought into contact with water. The composition of the present invention can thus develop desirable sound insulation performance when used as an intermediate film for laminated glass, and is suited as a material of an intermediate film for laminated glass.

## Claims

1. A composition comprising a compound (I), and one or more diester compounds (II) selected from compounds represented by formula 1 and compounds represented by formula 2,
the compound (I) and the one or more diester compounds (II) being contained in X parts by mass and Y parts by mass, respectively, with respect to 100 parts by mass of a polyvinyl acetal having an average amount of residual hydroxyl group of 15 to 50 mol%,
wherein the compound (I) is a compound selected from:
an ester compound of an unsaturated aliphatic carboxylic acid of 12 to 20 carbon atoms, and a monohydric to trihydric alcohol of 1 to 12 carbon atoms;
a polyester-based alcohol compound; and
a plasticizer compound having a bisphenol skeleton, and
wherein X = 3 to 100, Y = 5 to 60, and X + Y = 42 to 120, 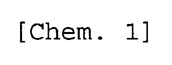 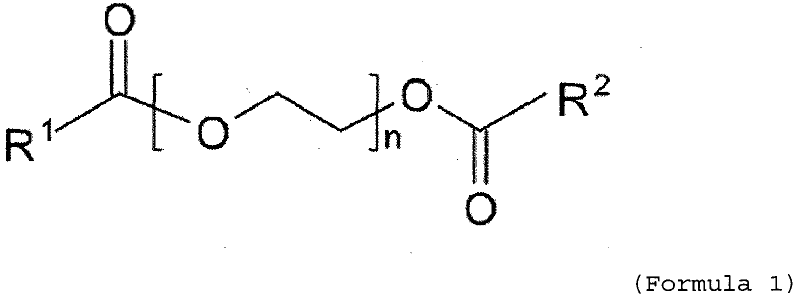 wherein R¹ and R² each independently represent a C5 to C16 organic group that may have an ether bond, and n is 1 to 10, 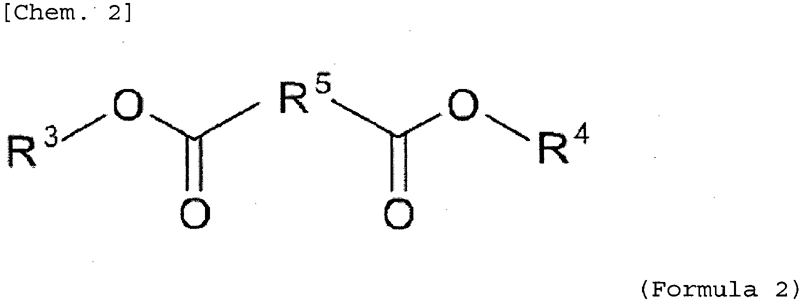 wherein R³ and R⁴ each independently represent a C4 to C16 organic group that may have an ether bond, and R⁵ is a hydrocarbon group of 2 to 10 carbon atoms.

2. The composition according to claim 1, wherein X < Y.

3. The composition according to claim 1 or 2, wherein the compound (I) has a hydroxyl number of 15 to 450 mgKOH/g.

4. The composition according to any one of claims 1 to 3, wherein the compound (I) is a polyester-based alcohol compound.

5. The composition according to claim 4, wherein the polyester-based alcohol compound contains a condensation polymer of a polyvalent carboxylic acid and a polyhydric alcohol.

6. The composition according to claim 5, wherein the polyvalent carboxylic acid is an aliphatic dicarboxylic acid of 4 to 12 carbon atoms.

7. The composition according to claim 5, wherein the polyhydric alcohol is an aliphatic diol of 2 to 12 carbon atoms.

8. The composition according to any one of claims 5 to 7, wherein the number of carbon atoms per molecule of the polyvalent carboxylic acid, and the number of carbon atoms per molecule of the polyhydric alcohol are total 10 to 20.

9. The composition according to claim 4, wherein the polyester-based alcohol compound contains a polymer of a hydroxycarboxylic acid or a lactone compound.

10. The composition according to claim 9, wherein the hydroxycarboxylic acid or the lactone compound has 2 to 10 carbon atoms.

11. The composition according to claim 4, wherein the polyester-based alcohol compound contains a condensation polymer of a carbonate compound and a polyhydric alcohol.

12. The composition according to claim 11, wherein the polyhydric alcohol is an aliphatic diol of 2 to 12 carbon atoms.

13. The composition according to any one of claims 1 to 3, wherein the compound (I) is a plasticizer compound having a bisphenol skeleton.

14. The composition according to claim 13, wherein the plasticizer compound having a bisphenol skeleton is a bisphenol ether compound.

15. The composition according to claim 14, wherein the bisphenol ether compound is a compound having a chemical structure of formula 3, 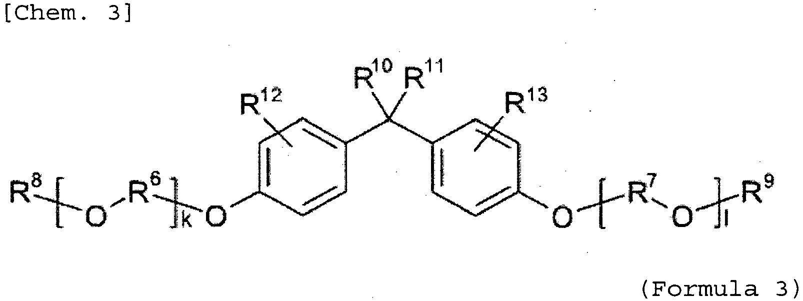 wherein R⁶ and R⁷ each independently represent a group selected from a dimethylene group that may have an alkyl substituent, a trimethylene group that may have an alkyl substituent, and a tetramethylene group that may have an alkyl substituent, R⁸ and R⁹ each independently represent a group selected from a hydrogen atom, an acyl group, and an alkyl group, R¹⁰ and R¹¹ each independently represent a group selected from a hydrogen atom and an organic group, R¹² and R¹³ each independently represent any substituent that may be present or absent, and k and 1 are any natural numbers, wherein the average of (k + 1) per molecule of the compound contained in a first plasticizer is 2 to 50.

16. The composition according to claim 15, wherein 50 to 100 mol% of R⁶ and R⁷ contained in the bisphenol ether compound is a dimethylene group that may have an alkyl substituent.

17. The composition according to claim 15 or 16, wherein 5 to 100 mass% of R⁸ and R⁹ contained in the bisphenol ether compound is a hydrogen atom.

18. The composition according to any one of claims 15 to 17, wherein R¹⁰ and R¹¹ contained in the bisphenol ether compound are methyl groups.

19. The composition according to any one of claims 1 to 3, wherein the compound (I) is an ester compound of an unsaturated aliphatic carboxylic acid of 12 to 20 carbon atoms, and a monohydric to trihydric alcohol of 1 to 12 carbon atoms.

20. The composition according to claim 19, wherein the monohydric to trihydric alcohol of 1 to 12 carbon atoms is a dihydric or trihydric alcohol of 2 to 12 carbon atoms.

21. The composition according to any one of claims 1 to 20, wherein the compound (I) has a number average molecular weight based on hydroxyl number of 200 to 2,500.

22. The composition according to any one of claims 1 to 21, wherein a mixture of X parts by mass of the compound (I) and Y parts by mass of the diester compound (II) is a homogenous liquid at 80°C.

23. The composition according to any one of claims 1 to 22, which has a weight loss of less than 2 mass% as measured after the composition is molded into a sheet measuring 5 cm in length, 5 cm in width, and 0.8 mm in thickness, and dipped in 92.5°C ± 2.5°C hot water for 2 hours.

24. A sheet comprising the composition of any one of claims 1 to 23.

25. An intermediate film for laminated glass, comprising the sheet of claim 24.

26. A multilayer intermediate film for laminated glass, comprising at least one layer of the sheet of claim 24.

27. A laminated glass comprising the intermediate film for laminated glass of claim 25, or the multilayer intermediate film for laminated glass of claim 26 between a pair of glass plates.
